Europäisches Patentamt

European Patent Office

Office européen des brevets

(19)

(11) Publication number: **0 200 688**
**A1**

(12) # EUROPEAN PATENT APPLICATION

(21) Application number: **86830070.8**

(22) Date of filing: **25.03.86**

(51) Int. Cl.⁴: **B 01 D 46/42**
**F 02 M 35/08**

(30) Priority: **27.03.85 IT 3572085 U**

(43) Date of publication of application:
**05.11.86 Bulletin 86/45**

(84) Designated Contracting States:
**AT BE CH DE FR GB LI LU NL SE**

(71) Applicant: **ITAL IDEE s.r.l.**
**Via dell'Elettronica, 16**
**I-00144 Roma(IT)**

(72) Inventor: **Cantoni, Angelo**
**Via Vitaliano Brancati, 51**
**I-00144 Rome(IT)**

(74) Representative: **Cavattoni, Fabio**
**Cavattoni & Raimondi Via Giuseppe Mangili, 16**
**I-00197 Roma(IT)**

(54) **Member for indicating clogging of the air intake filter, particularly for motor vehicle engines.**

(57) The indicator member of the invention consists of a duct (1) open at its opposite ends (2, 3) for location in communication with the air intake and outlet zones of a filter, and containing a slidable piston (5) carrying an indicator strip (6) visible from the outside, said piston (5) being able to slide within the duct (1), between an inner position and a position close to that end opening thereof in communication with the zone in which the air leaves the filter toward the engine, under the action of a pressure difference between the ends (2, 3) of the duct (1) corresponding to the pressure drop which the air undergoes in passing through the filter when the latter is in a state which requires its replacement because of clogging.

*Fig. 3*

EP 0 200 688 A1

Member for indicating clogging of the air intake filter, particularly for motor vehicle engines

For their operation, internal combustion engines of motor vehicles and the like need a considerable quantity of intake air, this being required for the combustion process.

However, atmospheric air contains a large quantity of solid particulate matter of various kinds, which if drawn in with the air can cause serious damage to the engine.

These engines are therefore provided at the combustion air inlet mouth with a filter able to retain a large portion of the solid particulate matter but without obstructing air passage, because of a large filtering surface which does not cause the intake air to undergo pressure drop.

However, with the passing of time these filters are subject to clogging due to the deposition of the filtered solid particulate matter, and therefore after a certain operating time offer a resistance to air passage which is no longer negligible. This results in a richer fuel feed, with a consequent increased fuel consumption and a decreased engine efficiency.

This clogging cannot however currently be reliably detected, it being judged either by an extremely subjective visual examination of the filter or in terms of a fixed time of operation of the filter, which however does not take into account the variability of the conditions under which the engine is used and the consequent variable degree of clogging of the filter.

The object of the present invention is therefore to provide a member able to offer a reliable indication of the filter working conditions, and which can be monitored without having to remove the filter from the filter casing in which it is housed.

This object is attained according to the present invention by a member for indicating clogging of the air intake filter, in particular for motor vehicle engines, which consists of a duct open at its opposite ends for location in communication with the air intake and outlet zones of a filter, and containing a slidable piston carrying an indicator strip visible from the outside, said piston being able to slide within the duct, between an inner position and a position close to that end opening thereof in communication with the zone in which the air leaves the filter towards the engine, under the action of a pressure difference between the ends of the duct corresponding to the pressure drop which the air undergoes in passing through the filter when this latter is in a state which requires its replacement because of clogging.

In particular, the duct comprises an intermediate portion to be disposed over a part of the filter, an end portion communicating with the filter intake zone, and an opposite end portion of tubular shape containing the piston and comprising a piston stop rim in a position close to the end opening which is in communication with the filter air outlet zone.

Conveniently, the end portion communicating with the filter intake zone extends to the outside of the filter casing in which the filter is located, and comprises an aperture in its upperly facing surface, the indicator strip rigid with the piston being visible through said aperture when the piston is in its inner position in the duct.

The intermediate duct portion is of small height but of sufficient width to ensure that the passage cross-section for the air is such as to make its pressure drop negligible during the movement of the piston, the indicator strip extending through the intermediate portion to reach as fas as the aperture in the end portion communicating with the intake zone. This intermediate portion also comprises stiffening and guide ribs for the indicator strip.

Preferably, the piston is of a material of low specific gravity, such as expanded plastics material or the like, in order to possess low inertia. Conveniently, the duct can be constructed of low-cost material to enable it to be replaced together with the filter when this latter is clogged, and/or to form an integral part of the filter structure.

Electrical or electronic sensors can also be connected to the piston or indicator strip in order to provide an indication of the piston movement on the vehicle instrument panel, in which case the indicator member would be mounted permanently in the filter casing, and the piston could be relocated in its inner position each time a filter is replaced due to clogging.

Further details will be apparent from the description given hereinafter with reference to the accompanying drawings in which:

Figure 1 is a plan view of the indicator member according to the invention;

Figure 2 shows the indicator member of Figure 1 without its upper part;

Figure 3 is a section on the plane III-III of Figure 1; and

Figure 4 is a diagrammatic section through a filter provided with the indicator member according to the invention.

As can be seen from the figures, the indicator member according to the invention consists of a duct 1 having an end portion 2 provided with an opening 2a to be located in communication with a zone external to the filter, and a tubular end portion 3 provided with an opening 4 communicating with the zone in which the air leaves the filter towards

the engine.                                                    0200688

In the tubular end portion 3 there is disposed a piston 5 of light material such as expanded closed-cell material, which can slide within the tubular portion 3 under the action of a slight pressure difference between the two parts of the tubular portion 3 separated by it.

A thin strip 6 of plastics material or the like is connected to this piston and extends through the intermediate portion 7 of the duct 1 as far as the end portion 2. In proximity to the opening 2a of said end there is an aperture 8, through which the end part of the strip 6 can be seen.

Under normal operating conditions, i.e. when the filter is clean, the pressure drop which the air undergoes in passing through this latter is very small and does not therefore influence the position of the piston 5.

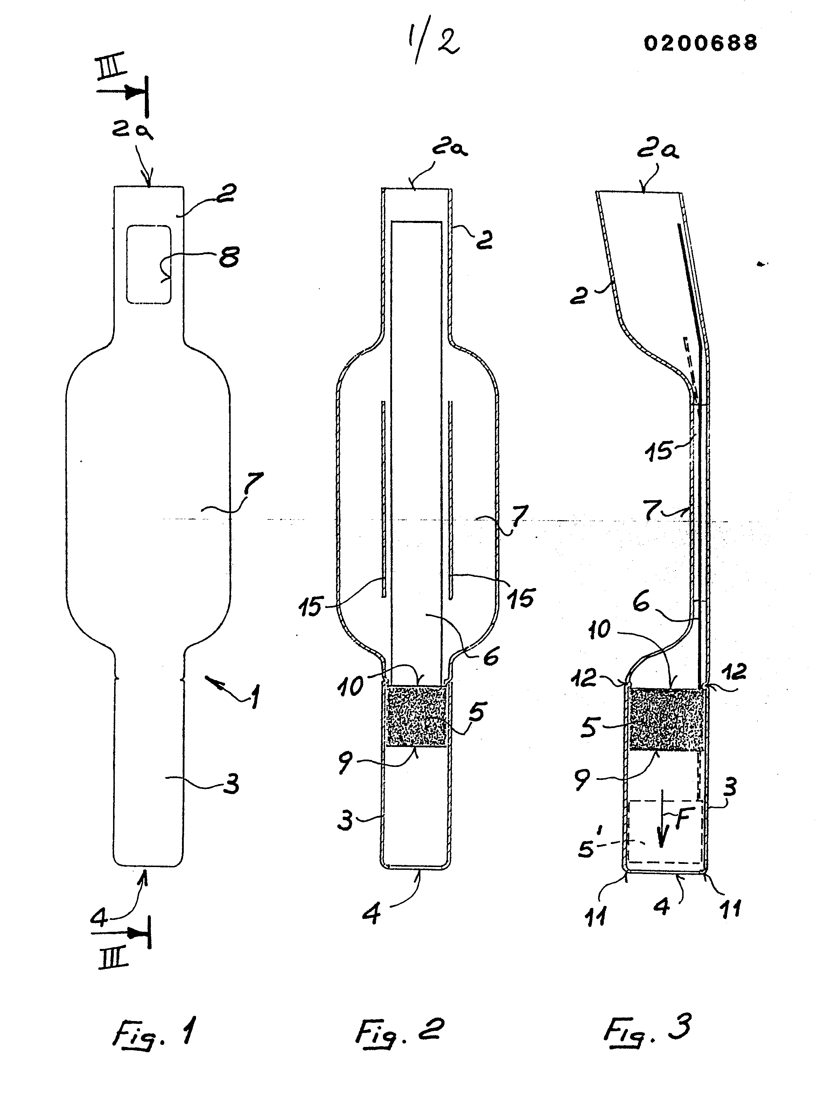

When the filter is clogged, the air drawn in by the engine undergoes a large pressure drop in passing through the filter, and this results in a vacuum at the filter outlet in the direction of the engine. This vacuum also acts on the face 9 of the piston 5 which faces the end portion 3, whereas the pressure of the external environment acts on that face 10 of the piston which is in communication with the outside by way of the intermediate portion 7 and the end portion 2 of the duct 1. Under these conditions, the piston thus moves in the direction indicated by the arrow F of Figure 3 to the position indicated by 5', in contact with the rim 11 at the opening 4 of the tubular end portion 3. The strip 6 is therefore no longer visible through the aperture 8, and this therefore signals that the filter is clogged and requires replacement or cleaning.

When the filter has been replaced or cleaned, the piston 5 can be again moved into its initial position, indicated by the stop projections 12

5 0200688

provided internally on the end portion 3 in the position in which the end of the strip 6 is visible through the aperture 8.

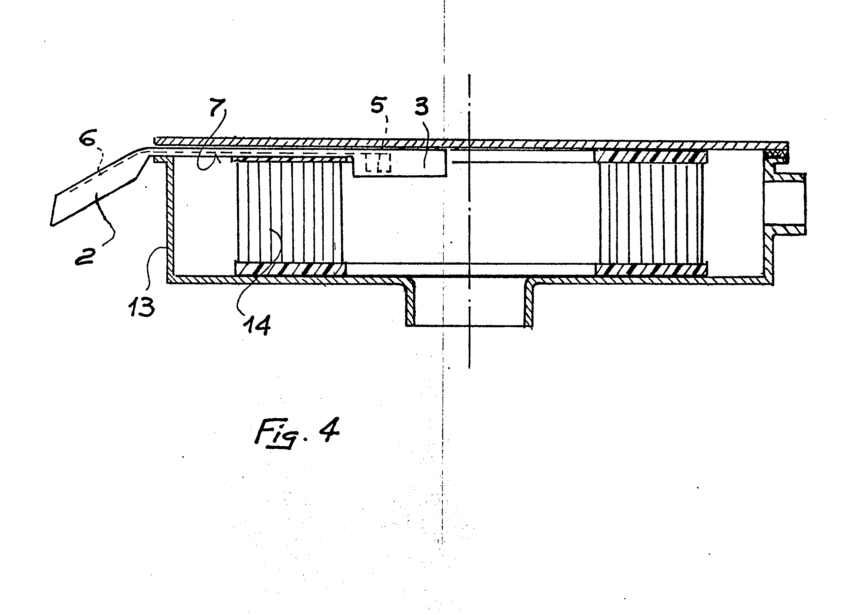

As can be seen in Figure 4, the indicator member according to the invention can be mounted in a filter casing 13, and disposed with its intermediate portion 7 over the annular filter 14. The tubular portion 3 thus lies in the inner zone of the filter, in communication with the engine intake duct, and the end portion 2 lies external to the casing 13, enabling the aperture 8 to be seen without dismantling the filter casing.

This is attained by a slight deformation of the seal gaskets of the casing 13 and filter 14, the intermediate portion 7 being constructed with a very small thickness, which is less than the deformability of said gaskets.

The intermediate portion 7 is wider than the remaining parts of the duct 1, to provide in the zone corresponding with said small thickness an intake air passage area large enough to give sufficient indication sensitivity by limiting the pressure drop.

Guide baffles 15 are conveniently provided in the intermediate portion 7 to help maintain the strip 6 aligned with the piston 5 connected to it, and to also provide rigidity to the portion 7 zone which is to be compressed for deforming said gaskets.

A filter could also be formed suitable for housing the indicator member according to the invention. In this case, the upper gaskets of the filter must comprise a zone of reduced thickness which exactly houses the intermediate portion 7 of the duct 1.

The piston 5, constructed of expanded material, has an extremely small mass and therefore the acceleration of the vehicle during its running is unable to cause the piston to shift its position by overcoming the friction exerted against the inner walls of the tubular portion 3 of the duct 1.

An electrical or electronic sensor can also be applied to the piston 5 or strip 6, to transmit an indication of the piston position and thus the clogging state of the filter directly to the instrument panel inside the vehicle.

The member according to the invention can be constructed of low-cost material, so that it can be replaced together with the filter when this is clogged. In this case, it could also be constructed as an integral part of the filter structure.

Claims: **0200688**

1. A member for indicating clogging of the air intake filter, in particular for motor vehicle engines, characterised by consisting of a duct (1) open at its opposite ends for location in communication with the air intake and outlet zones of a filter, and containing a slidable piston (5) carrying an indicator strip (6) visible from the outside, said piston (5) being able to slide within the duct (1), between an inner position and a position close to that end opening thereof in communication with the zone in which the air leaves the filter towards the engine, under the action of a pressure difference between the ends of the duct correspor ing to the pressure drop which the air undergoes in passing through the filter when this latter is in a state which requires its replacement because of clogging.

2. An indicator member according to claim 1, characterised in that said duct (1) comprises an intermediate portion (7) to be disposed over a part of the filter, an end portion (2) communicating with the filter intake zone, and an opposite end portion (3) of tubular shape containing the piston (5) and comprising a piston stop rim (11) in a position close to the end opening (4) which is in communication with the filter air outlet zone.

3. An indicator member according to claim 1 or 2, characterised in that the end portion (2) communicating with the filter intake zone extends to the outside of the filter casing in which the filter is located.

4. An indicator member according to claim 3, characterised in that the end portion (2) communicating with the intake zone comprises an aperture (8) in its upperly facing surface, said indicator strip (6) rigid with the piston (5) being visible through said aperture (8) when the piston (5) is in its inner position in the duct (1).

0200688

5. An indicator member according to any of claims 1 to 4, characterised in that the intermediate duct portion (7) is of small height but of sufficient width to ensure that the passage cross-section for the air is such as to make its pressure drop negligible during the movement of the piston (5), said indicator strip (6) extending through the intermediate portion (7) to reach as far as the aperture (8) in the end portion (2) communicating with the intake zone.

6. An indicator member according to claim 5, characterised in that the intermediate duct portion (7) comprises stiffening and guide ribs (15) for the indicator strip (6).

7. An indicator member according to any of the preceding claims, characterised in that the piston (5) is constructed of a material of low specific gravity, such as expanded plastics material or the like.

8. An indicator member according to any of the preceding claims, characterised in that the duct (1) is constructed of low-cost material to enable it to be replaced together with the-clogged filter.

9. An indicator member according to claim 8, characterised by forming an integral part of the filter structure.

10. An indicator member according to any of claims 1 to 7, characterised in that electrical or electronic sensors are connected to the piston (5) or indicator strip (6) in order to provide an indication of the piston movement on the vehicle instrument panel, the indicator member being mounted permanently in the filter casing, and the piston (5) being relocated in its inner position in the duct (1) each time a clogged filter is replaced.

0200688

Fig. 1

Fig. 2

Fig. 3

Fig. 4

0200688

European Patent
Office

**EUROPEAN SEARCH REPORT**

**0200688**
Application number

EP 86 83 0070

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| A | DE-A-2 651 256 (MOTORENFABRIK HATZ) <br> * Page 3, paragraph 1; page 4, paragraph 3; page 5, last 2 lines; page 6, paragraphs 1,2; page 7; figures * | 1,3,10 | B 01 D 46/42 <br> F 02 M 35/08 |
| A | GB-A- 345 440 (SMITH) <br> * Page 3, lines 7-23 * | 1,10 | |
| A | FR-A-2 268 951 (C.F.E.A.) <br> * Page 3, lines 34-40; page 4, lines 1-19 * | 1,9,10 | |
| A | US-A-4 162 660 (ALBERTSON) <br> * Abstract; figure 3 * | 1 | |
| | --- | | TECHNICAL FIELDS SEARCHED (Int. Cl.4) |
| | | | F 02 M <br> B 01 D |

The present search report has been drawn up for all claims

| Place of search <br> THE HAGUE | Date of completion of the search <br> 27-06-1986 | Examiner <br> JORIS J.C. |
|---|---|---|